# EUROPÄISCHE PATENTSCHRIFT

(11) **EP 0 941 372 B1**
(45) Veröffentlichungstag und Bekanntmachung des Hinweises auf die Patenterteilung: **26.03.2003**
(21) Anmeldenummer: 98951449.2
(22) Anmeldetag: 22.09.1998
(51) Int. Cl.: C23C 2/12, C23C 2/38, C23C 10/52, C22C 38/28, C22C 38/06

(54) **OXIDATIONSBESTÄNDIGE METALLFOLIE UND DEREN VERWENDUNG**
OXIDATION-RESISTANT METAL FOIL AND ITS USE
FEUILLES METALLIQUES RESISTANT A L'OXYDATION ET LEUR UTILISATION

(30) Priorität: 02.10.1997 DE 19743720
(43) Veröffentlichungstag der Anmeldung: 15.09.1999
(73) Patentinhaber: ThyssenKrupp VDM GmbH, 58791 Werdohl (DE)
(72) Erfinder: HEUBNER, Ulrich, D-58791 Werdohl (DE); KOLB-TELIEPS, Angelika, D-58509 Lüdenscheid (DE); HOJDA, Ralf, D-58762 Altena (DE)
(86) Internationale Anmeldenummer: EP9806033
(87) Internationale Veröffentlichungsnummer: WO99018251

(56) Entgegenhaltungen:
- EP-A- 0 402 640
- EP-A- 0 475 420
- EP-A- 0 516 097
- EP-A- 0 573 343
- EP-B- 0 204 423
- GB-A- 2 224 288
- PATENT ABSTRACTS OF JAPAN vol. 015, no. 167 (C-0827), 26. April 1991 -& JP 03 036241 A (AICHI STEEL WORKS LTD), 15. Februar 1991

## Beschreibung

Die Erfindung betrifft eine Eisen-Chrom-Aluminium-Metallfolie mit hoher Hochtemperaturoxidationsbeständigkeit gemäß gattungsbildendem Teil des ersten Patentanspruches.

Die US-A 4,414,023 beschreibt einen Stahl mit 8,0 - 25,0 % Cr, 3,0 - 8,0 % Al, 0,002 - 0,06 % Se, max. 4,0 % Si , 0,06 - 1,0 % Mn, 0,035 - 0,07 % Ti, 0,035 - 0,07% Zr, einschließlich unvermeidbarer Verunreinigungen.

Der EP-A 0 387 670 ist eine Legierung mit 20 - 25 % Cr, 5 - 8 % Al, max. 0,01 % P, max. 0,01 % Mg, max. 0,5 % Mn, max. 0,005 % S, Rest Fe, einschließlich unvermeidbarer Verunreinigungen zu entnehmen, bei welcher ggf. noch weitere Legierungselemente, wie 0,03 % Y, 0,004 % N, 0,02 - 0,04 % C, 0,035 - 0,07 % Ti , 0,035 - 0,07 % Zr und 0,035 - 0,14 % Hf zugegeben werden.

Bei den genannten Dokumenten geht man jedoch aus von traditionellen Herstellungsverfahren, nämlich dem konventionellen Gießen der Legierung und dem anschließenden Warm- und Kaltverformen. Hier muß der Nachteil in Kauf genommen werden, daß Eisen-Chrom-Aluminium-Legierungen durch konventionelle Walz- und Glühprozesse schwer herstellbar sind und daß dieser Nachteil bei einer Erhöhung des Aluminiumgehaltes immer stärker zum Tragen kommt. Bei Aluminiumgehalten von mehr als 6 % werden die mit diesen Prozessen verbundenen Probleme sogar so groß, daß ein Verarbeiten dieser Legierung im großtechnischen Maßstab praktisch nicht mehr möglich ist, so daß derart hochaluminiumhaltige Legierungen im Markt bisher gar nicht angeboten werden. Höhere Aluminiumanteile sind aber bei diesem Herstellungsverfahren unabdingbar, um die Oxidationsbeständigkeit noch weiter zu verbessern oder aber um den elektrischen Widerstand zu erhöhen, wie es für bestimmte Anwendungen erforderlich ist.

Die EP-B 0 204 423 beschreibt einen anderen Weg zur Herstellung von mehrschichtigen Metallfolien, und zwar den des Feueraluminierens. Diese Druckschrift geht aber von einer Eisen-Chrom-Legierung ohne reaktive Zusätze aus. Nun hat es sich, wie im späteren Beispiel 2 beschrieben, gezeigt, daß derartige Werkstoffe für die Anwendung als Katalysatoren unzureichend sind, weil sie nicht ausreichend oxidationsbeständig sind. Für den Einsatz als Katalysator sind Zusätze reaktiver Elemente unbedingt erforderlich. Desweiteren beschreibt die genannte Druckschrift, daß Aluminiumlegierungen, die Silizium enthalten, keine zufriedenstellenden Ergebnisse für die Praxis ergeben haben.

Durch die EP-B 0 516 097 ist eine zunderbeständige Fe-Cr-AI-Legierung mit Zusätzen von La, Y und Hf bekannt geworden, die auf dem Wege des Beschichtens, insbesondere des Walzplattierens hergestellt werden kann.

Die DE-A 36 21 569 betrifft die Herstellung einer Chrom-Aluminium-Eisen-Legierung zur Verwendung als Trägermaterial für Katalysatoren, wobei die Legierung 10 - 61 Gew.-% Chrom, 6 - 25 Gew.-% Aluminium und je 0,001 - 1,0 Gew.-% lebensdauererhöhender Zusätze beinhaltet. Die Legierung wird durch Schnellabschrecken der Schmelze an einer sich bewegenden Kühlfläche in Bandform hergestellt, dergestalt, daß ein Band mit einer Enddicke zwischen 10 und maximal 60 µ direkt, d.h. ohne weitere Umformverfahren erzeugt wird. Nachteilig ist festzustellen, daß keine Beschichtung eines Trägerbandes stattfindet, wobei sich infolge der unmittelbaren gieß- und abkühltechnischen Erzeugung der Enddicke Planheitsfehler im Band einstellen, die bei einer Weiterverarbeitung desselben zu Katalysatorträgerstrukturen zu Fertigungsproblemen führen.

Der EP-A 402 640 sowie der EP-A 497 992 sind rostfreie Stahlfolien für Fahrzeugkatalysatorträger zu entnehmen. Auch hier findet keine Beschichtung eines Trägerbandes statt, vielmehr wird analog zur DE-A 36 21 569 die Aluminium enthaltende rostfreie Stahlschmelze durch schnelle Erstarrung mit einer Dicke geringer als 0,2 mm direkt erzeugt, wobei sich im Anschluß daran ein Kaltwalzvorgang dieser gegossenen Folie anschließt. Der Al-Gehalt soll zwischen 1,0 und 20 Gew.-% liegen, während ein Chromanteil zwischen 5 und 30 Gew.-% vorgesehen ist.

Der Erfindung liegt die Aufgabe zugrunde, ein Verfahren zur Herstellung einer Eisen-Chrom-Aluminium-Metallfolie zur Verfügung zu stellen, wobei die Legierung bis in Temperaturbereiche von 1 100 °C eine gegenüber konventionellen Legierungen verbesserte Oxidationsbeständigkeit aufweist. Der Werkstoff soll zudem kostengünstig produziert werden können und für eine Reihe von Bauelementen für Hochtemperaturanwendungen geeignet sein.

Diese Aufgabe wird durch die im Kennzeichen des Anspruches 1 angegebenen Merkmale gelöst.

Vorteilhafte Weiterbildungen der erfindungsgemäßen Eisen-Chrom-Aluminium-Metallfolie sind den zugehörigen Unteransprüchen zu entnehmen.

Die erfindungsgemäße Metallfolie ist bevorzugt verwendbar als Heizleiterwiderstand oder als Träger für Abgaskatalysatoren.

Die erfindungsgemäße Metallfolie kann gewonnen werden beispielsweise auf dem Wege des Blockgießens, noch kostengünstiger jedoch durch Strangguß, sowie anschließende Warm- und Kaltverformung hergestellt werden. Bei einer Dicke zwischen 0,5 und 2 mm wird dieses Band je Seite mit einer Auflage beschichtet, welche aus Aluminium mit 8 - 13 % Silizium besteht. Die Beschichtung wird über den Weg des Feueraluminierens aufgebracht. Der so hergestellte Verbund wird vorzugsweise mit mindestens einer Zwischenglühung zur Folie kaltgewalzt und beinhaltet dann noch die mechanischen Voraussetzungen für die weiteren Verarbeitungsschritte, wie beispielsweise das Wellen, welches bei der Katalysatorherstellung erforderlich ist.

Eine anschließende bzw. abschließende Wärmebehandlung erfolgt vorteilhafterweise bei Temperaturen zwischen 700 und 1 200 °C, wobei eine in Bezug auf möglichst wirtschaftliche Fertigung sinnvolle Weiterbildung darin besteht, daß die Wärmebehandlung in Form der an sich bekannten Diffusionsglühung nach der endgültigen Formgebung der aus der Metallverbundfolie hergestellten Endprodukte und "in situ", also etwa nach der Fertigstellung der Katalysatoreinrichtungen erfolgt, bzw. erst am fertig hergestellten Katalysator-Trägerkörper. Für bestimmte andere Anwendungen, z.B. für den Einsatz als Heizelement, wird die Diffusionsglühung unmittelbar an der Folie vorgenommen.

Überraschenderweise führt dies zu einer deutlichen Verbesserung der Oxidationsbeständigkeit, insbesondere für Hochtemperatureinsatzfälle. Besonders wichtig ist es, die Art der reaktiven Zusätze auszuwählen. Wie bereits beschrieben, kommt es einerseits auf die Art der Zusätze an, und andererseits auch auf deren Obergrenzen. So sollen 0,08 Masse-% Y auf keinen Fall überschritten werden. Wesentlich sind auch die Siliziumzusätze in der Beschichtung, weil sie das Diffusionsverhalten in der gewünschten Weise vorteilhaft beeinflussen.

Bei Anwendung einer Zwischenglühung sind Änderungen der Abmessung eines aus diesem Werkstoff hergestellten Bleches an Enddicke auch bei Schlußglühungen bis zu etwa 1 150 °C unterhalb von 0,5 % realisierbar.

Wird der Verbund zwischengeglüht, so sind Temperatur und Haltezeit so zu wählen, daß einerseits das Walzen an Enddicke problemlos möglich ist, d. h. die Entstehung intermetallischer Phasen ist, soweit möglich, zu unterdrücken. Andererseits kann eine solche Zwischenglühung genutzt werden, um einen Teil des Aluminiums in das Trägerband diffundieren zu lassen. Daraus ergibt sich überraschenderweise der Vorteil, daß die Volumenänderung bei der Wärmebehandlung an Enddicke wesentlich reduziert werden kann.

Eine weitere vorteilhafte Ausgestaltung der Erfindung besteht darin, die oben beschriebenen Eisen-Chrom-Aluminium-Legierungen mit Hilfe der Beschichtung noch weiter mit Aluminium und Silizium aufzulegieren, um somit ihre Oxidationsbeständigkeit und ihren elektrischen Widerstand zu erhöhen. Dies ist auch möglich, wenn von einem Trägerband ausgegangen wird, welches schon bis zu 6 % Aluminium enthält und dann nur noch eine dünnere Beschichtung erfordert.

Der Erfindungsgegenstand wird durch die nachstehenden Beispiele näher erläutert, wobei die Beispiele 1 und 2 lediglich Vergleichsbeispiele zum Erfindungsgegenstand darstellen.

### Vergleichsbeispiel 1

Erschmolzen und auf konventionellem Wege durch Walzen und Glühen verarbeitet wurde folgende Legierung in Masse %:
20,45 % Cr
0,20 % Si
0,05 % Hf
0,02 % Zr
<0,01 % Ti
5,55 % Al
0,06 % Y.

Ihr Oxidationsverhalten wurde nach einer Auslagerung bei 1 100 °C untersucht und mit dem einer Legierung mit Zusätzen von Seltenen Erden verglichen, wobei eine um 20 % geringere Massenänderung bei dem Material mit Zusätzen von Y und Hf gefunden wurde.

Vergleicht man nun damit eine Legierung, welche zwar Y, aber auch Ti und keine Zusätze von Hf enthält, so ändert sich deren Masse ebenfalls um mehr als 10 % mehr als die Legierung mit Zusätzen von Seltenen Erden.

Aus diesen Untersuchungen folgt, daß sich die als Beispiel 1 aufgeführte Zusammensetzung hinsichtlich ihrer Oxidationsbeständigkeit, wie sie für Anwendungen im Katalysator- und Heizleiterbereich notwendig ist, deutlich positiv von den übrigen, gängigeren Legierungen abhebt.

### Vergleichsbeispiel 2

Ein Trägerwerkstoff mit der Zusammensetzung in Masse-%
15,91 % Cr
<0,01% Y
<0,01 % Zr
<0,01 % Hf

Rest Eisen und verfahrensbedingte Verunreinigungen wurde auf dem Wege des Feueraluminierens mit
3,8 % Al und 0,4 % Si
hergestellt, durch Walzen zu einer Folie verformt und anschließend diffusionsgeglüht. Nach 400-stündiger Auslagerung bei 1 100 °C nahm der Trägerwerkstoff an Masse 10 mal soviel zu wie eine Vergleichslegierung mit Zusätzen von SE, seine Länge änderte sich etwa um den Faktor 2 stärker.

### Beispiel 3

Die erfindungsgemäße Legierung wurde auf dem Wege des Feueraluminierens hergestellt und besitzt folgende chemische Zusammensetzung (in Masse-%):
18,35 % Cr
0,59 % Si
5,4 % Al
0,03 % Zr
0,04 % Y
0,05 % Hf

Rest Eisen mit verfahrensbedingten Verunreinigungen.

Sie wurde bei 1 100 °C diffusionsgeglüht und zeigte danach über die Banddicke die folgende Aluminiumverteilung:

Auf der Oberfläche wurden 10 Masse-% Aluminium bestimmt, 5 µm unter den Oberflächen etwa 5 % und im Bandinneren 3,5 %.

Diese wirkt sich besonders vorteilhaft auf die Oxidationsbeständigkeit aus. Die Massenänderung bei 1 100 °C ist um 25 % geringer als bei einer Vergleichslegierung, die auf dem konventionellen Wege hergestellt wurde, beispielsweise wie sie in Beispiel 1 beschrieben wurde. Als weiterer Vorteil kommt hinzu, daß die Herstellungskosten auf dem Wege des Feueraluminierens nur bei etwa 75 % der Kosten der konventionellen Legierungen liegen.

### Beispiel 4

Aus dem gemäß Beispiel 3 erzeugten Band wurde bei einer Dicke von 0,11 mm ein Streifen herausgeschnitten. Einzelne Stücke wurden bei Temperaturen, die untenstehender Tabelle zu entnehmen sind, geglüht und dann an die Enddicke von 50 um gewalzt. Während der sich anschließenden Schlußglühung bei 1 100 °C änderten sich Länge und Breite um weniger als 0,5 %.

| Temperatur der Zwischenglühung / °C | Änderung von Länge bzw. Breite / % |
|---|---|
| 800 | 0,3 |
| 900 | 0,2 |
| 1 000 | 0,2 |

## Patentansprüche

1. Eisen-Chrom-Aluminium-Metallfolie mit hoher Hochtemperaturoxidationsbeständigkeit, die durch Feueraluminieren eines Eisen-Chrom-Trägerbandes mit einer Aluminium-Silizium-Legierung oxidationsbeständig ist, wobei die Folie an Elementen im wesentlichen Cr, Al, Si, Fe und verfahrensbedingte Verunreinigungen enthält und der Gesamt-Al-Gehalt der beschichteten Metallfolie von der Oberfläche zum Inneren hin abfällt, **dadurch gekennzeichnet, daß** die Folie folgende Zusammensetzung (in Masse-%) aufweist:
> 18 - 25 %Cr
4 - 10 % Al
0,03 - 0,08 % Y
max. 0,01 % Ti
0,01 - 0,05 % Zr
0,01 - 0,05 % Hf
0,5 - 1,5 % Si
Rest Eisen und verfahrensbedingte Verunreinigungen, und daß im Anschluß an einen Walzvorgang ein Formkörper hergestellt und dieser anschließend einer Diffusionsglühung unterzogen wird, wobei der Gesamtaluminiumgehalt in Oberflächennähe bei mindestens 7 % liegt und zum Inneren hin nicht unter 3 % abfällt.

2. Eisen-Chrom-Aluminium-Metallfolie nach Anspruch 1, **dadurch gekennzeichnet, daß** der Gesamtaluminiumgehalt in Oberflächennähe bei mindestens 10 % liegt, der zum Inneren hin nicht unter 5 % abfällt.

3. Metallfolie nach Anspruch 1 oder 2, die einen elektrischen Widerstand von mehr als 1,5 Ωmm²/m aufweist.

4. Verwendung der Eisen-Chrom-Aluminium-Metallfolie mit hoher Hochtemperaturoxidationsbeständigkeit gemäß Anspruch 1 als Heizleiterwiderstand.

5. Verwendung der Eisen-Chrom-Aluminium-Metallfolie mit hoher Hochtemperaturoxidationsbeständigkeit gemäß Anspruch 1, als Träger für Abgaskatalysatoren.

## Claims

1. Iron-chromium-aluminium metal foil having a high oxidation resistance at high temperatures, which foil is made oxidation stable by fire aluminizing an ironchromium carrier band with an aluminium-silicium alloy, the foil essentially comprising the elements Cr, Al, Si, Fe and production dependent impurities, and the total Al content of the coated metal foil decreases from the surface towards the interior, **characterized in that** the foil has the following composition (in % by mass):
> 18 - 25 % Cr
4 - 10 % Al
0.03 - 0.08 % Y
max. 0.01 % Ti
0.01 - 0.05 % Zr
0.01 - 0.05 % Hf
0.5 - 1.5 % Si
rest iron and production dependent impurities, and that after a rolling operation, a formed body is produced and subsequently subjected to a homogenizing treatment, wherein the total aluminium content in proximity to the surface is at least 7 % and does not fall beneath 3 % towards the interior.

2. Iron-chromium-aluminium metal foil according to claim 1, **characterized in that** the total aluminium content in proximity to the surface is at least 10 %, which does not fall beneath 5 % towards the interior.

3. Metal foil according to claim 1 or 2, which has an electric resistance of more than 1.5 Ωmm²/m.

4. Use of the iron-chromium-aluminium metal foil having a high oxidation resistance at high temperatures according to claim 1 as heat conductor resistance.

5. Use of the iron-chromium-aluminium metal foil having a high oxidation resistance at high temperatures according to claim 1 as carrier for exhaust gas catalysts.

## Revendications

1. Feuille métallique en fer-chrome-aluminium ayant une haute stabilité à l'oxydation à hautes températures, laquelle est rendue stable à l'oxydation par aluminer à feu un alliage aluminium-silicium sur un feuillard de support en ferchrome, la feuille contenant essentiellement les éléments Cr, Al, Si, Fe et des impuretés résultant de l'élaboration et la teneur totale en aluminium de la feuille couverte de la couche diminuant de la surface vers l'intérieur, **caractérisée en ce que** la feuille a la composition suivante (en % en poids) :
> 18 - 25 % de Cr
4 - 10 % de Al
0,03 - 0,08 % de Y
max. 0,01 % de Ti
0,01 - 0,05 % de Zr
0,01- 0,05 % de Hf
0,5 - 1,5 % de Si
le reste étant du fer et des impuretés résultant de l'élaboration et qu'après une opération de laminage on produit un corps formé et le soumet après à un traitement d'homogénéisation, la teneur totale en aluminium au voisinage de la surface étant au moins 7 % et ne diminuant pas à moins de 3 % vers l'intérieur.

2. Feuille métallique en fer-chrome-aluminium selon la revendication 1, **caractérisée en ce que** la teneur totale en aluminium au voisinage de la surface a une valeur d'au moins 10%, qui ne diminue pas à moins de 5 % vers l'intérieur.

3. Feuille métallique selon la revendication 1 ou 2, qui a une résistance électrique de plus de 1,5 Ωmm²/m.

4. Utilisation de la feuille métallique en fer-chrome-aluminium ayant une haute stabilité à l'oxydation à hautes températures selon la revendication 1 en tant que conducteur chauffant.

5. Utilisation de la feuille métallique en fer-chrome-aluminium ayant une haute stabilité à l'oxydation à hautes températures selon la revendication 1 en tant que support pour des catalysateurs.
